# EUROPEAN PATENT SPECIFICATION

(11) **EP 3 459 346 B1**
(45) Date of publication and mention of the grant of the patent: **30.07.2025**
(21) Application number: 18195049.4
(22) Date of filing: 18.09.2018
(51) Int. Cl.: A01G 25/09, F16L 11/12

(54) **AN IRRIGATION HOSE**
BEWÄSSERUNGSSCHLAUCH
TUYAU D'IRRIGATION

(30) Priority: 22.09.2017 IT 201700106560
(43) Date of publication of application: 27.03.2019
(73) Proprietor: Irriland S.R.L., 42016 San Giacomo Guastalla Reggio Emilia (IT)
(72) Inventor: MANGHI, Claudio, 42011 Bagnolo in Piano Reggio Emilia (IT)
(74) Representative: Paparo, Aldo

(56) References cited:
- EP-A1- 3 056 079
- US-A1- 2006 174 960
- US-A1- 2012 111 378
- US-A1- 2015 053 298

## Description

The present invention relates to an irrigation hose according to claim 1. According to a preferred embodiment an irrigation device is provided with a hose according to the invention.

Such an irrigation device can be applied in the agricultural or forestry sector, and in all sectors where irrigation with a fluid is necessary. Such fluid may be water, slurry, zootechnical effluents and effluents coming from bio-energy power stations.

Irrigation systems known in the agricultural sector comprise a winding reel and a supply hose, the latter connected to a dispenser.

The dispenser is generally mounted on board a trolley which is moved on the soil to be irrigated.

Generally, the winding reel is arranged on one side of the soil to be irrigated while the trolley is mounted on board the dispenser which is initially arranged on the opposite side to the one where the reel is located. As the irrigation cycle proceeds,it is known that the trolley is drawn towards the reel to travel along the soil to be irrigated.

In an initial positioning step of the system, the trolley that bears the dispenser or irrigator is transported into an end position, at a certain distance from the winding reel. The transport of the trolley that bears the dispenser is performed by means of an agricultural tractor that, starting from the winding reel, moves towards the end position. During the transport of the irrigator trolley, the hose is gradually unwound from the reel, being dragged along the ground.

The systems currently available have a serious drawback.

In fact, the supply hose frequently suffers from damage and breaks because of the excessive friction that is generated as it is dragged along the ground. In particular, the friction between the hose and the ground mainly depends on the type of crop and the type of soil.

On soils where short crops are grown such as, for example, potatoes or beet and more generally similar crops, in any field where forage is cultivated which is not irrigated straight after the mowing operation, between the outer wall of the supply hose and the leaves of the plants themselves a high level of friction is generated such as to bring the supply hose to localised and concentrated traction that often causes the hose to break or the plants to be damaged. Therefore, irrigation on short crops, with many leaves, causes mechanical stress on the supply hose.

Furthermore, in the case of clay soils, and particularly in damp or wet soil conditions, the hose tends to get very stuck to the soil, hence being subjected to very high traction while being pulled.

The high friction that is produced while pulling the hose on the soil can also cause the reel to be pulled and overturned.

Furthermore, the friction between the hose and the soil can cause mechanical breaks to the motion transmission members or structural breaks to the winding reel.

An example of prior art irrigation device, suffering the drawbacks above underlined, is disclosed in document EP3056079.

Another prior art document US2012/0111378 A1 discloses a hose which includes a reinforcement structure and a layer exterior to the reinforcement structure. The layer includes a plurality of extensions projecting outwardly. Wear of the plurality of extensions provides a visual indication of the degree of wear of the hose.

The object of the present invention is offering an irrigation device which allows the drawbacks of current irrigation devices to be overcome.

An advantage of the irrigation device according to the present invention which is achieved with claim 2, is that it wastes less energy during the step of pulling the hose, and is significantly more resistant to damage and wear with respect to the irrigation devices or systems currently available.

Further features and advantages of the present invention will become more apparent in the following detailed description of an embodiment of the present invention, illustrated by way of non-limiting example in the attached figures, in which:

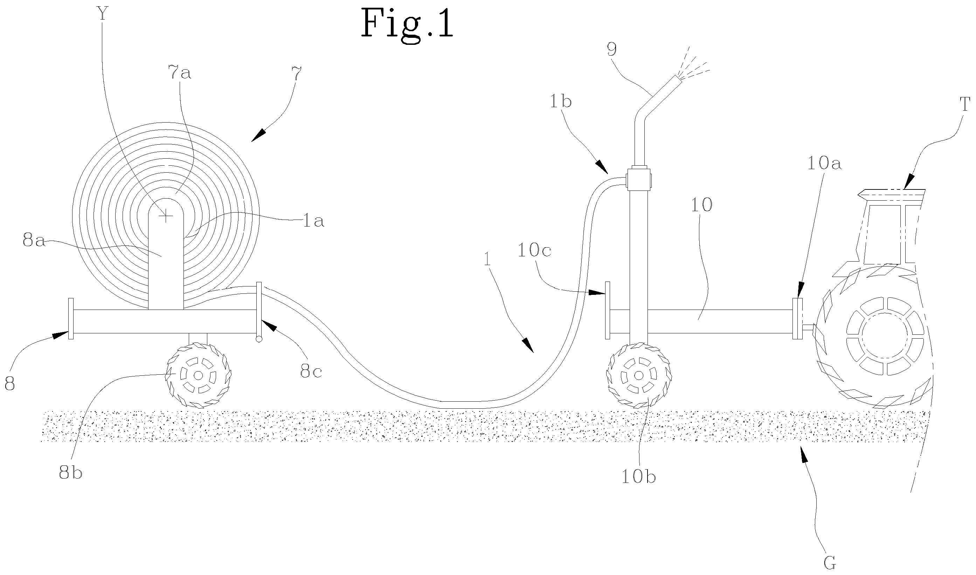

- figure 1 schematically shows an irrigation device according to the present invention;

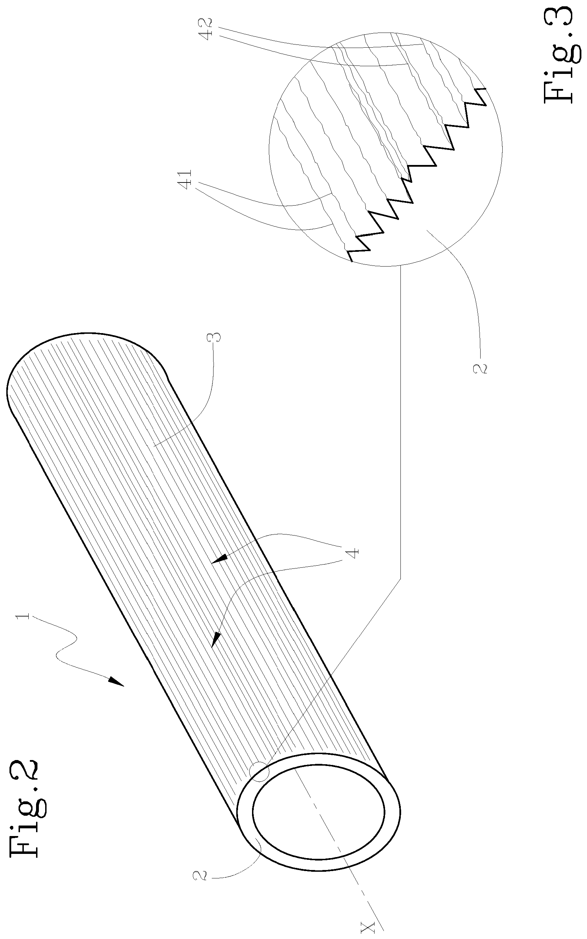

- figure 2 shows a schematic view of an irrigation hose according to the present invention;
- figure 3 shows an enlargement of a zone of the hose of figure 2.

According to the present invention a hose (1) is provided, which has a main body (2), with a tubular conformation and provided with a longitudinal axis (X). The main body (2) has a predetermined length and is flexible, so as to be able to be curved for rolling up in a reel. For example, the main body (2) is made of polyethylene (PE), a material that lends itself particularly well to the realisation method that will be described below.

The main body (2) comprises an outer surface (3) concentric to the longitudinal axis (X). Such outer surface (3) comes into contact with the soil (G) while the hose (1) is being pulled.

According to the invention the outer surface (3) comprises a plurality of scorings (4) parallel to the longitudinal axis (X). Such scorings (4) comprise a plurality of peaks (41) and troughs (42) alternating with each other. The scorings (4) substantially interrupt the continuity of the outer surface (3).

The presence of scorings (4), conformed as described above, allows the friction that is created between the outer surface of the main body (2) and the crops to be drastically reduced. As well as strongly limiting the damage caused to the crops due to the dragging of the hose (1), this allows the energy wasted for dragging the hose to be drastically reduced, both during the hose unwinding and winding steps. During the unwinding step, less wasted energy implies the possibility of using substantially smaller tractors (T) with respect to those currently required, which crush the crops and the soil a lot less that what currently happens. During the winding step it is possible to notably reduce the power used, with respect to what is required of the irrigation devices currently used.

The effect of reducing friction with the soil is particularly noticeable in an embodiment of the hose in which the distance between a peak and the two adjacent troughs is comprised between 0.2 and 1.5 mm, in particular it is about 1 mm.

According to the invention the scorings (4) are irregular, i.e. they have irregular shaped peaks (41) and/or irregular shaped troughs (42). This contributes to further reducing friction with the soil. In other words, each peak (41) has a profile that, on a section plane radial with respect to the longitudinal axis (X), is not defined by a straight line, but by a broken line with a sinuous trend. The same can be said for the troughs (42).

The irrigation device further comprises a winding reel (7), provided with a winding drum (7a) that rotates about an axis of rotation (Y). In a known way, a first end (1a) of the hose (1) is connected to the winding drum, and in particular to a connector, solidly connected to the winding drum, which is provided to allow the connection to a pump or to a pressurised water source. The reel (7) is associated with a support frame (8) structured to allow the rotation of the winding drum about the axis of rotation (Y). For example, the support frame (8) comprises a pair of shoulders (8a), substantially vertically oriented, with which the winding drum is associated, rotating about the axis (Y). The support frame (8) can also be provided with wheels (8b) for resting on the soil and to allow the towing movement of the frame (8) itself.

As already mentioned in the introductory part of the description, also in the present invention the unwinding of the hose (1) takes place by pulling performed by a tractor (T). The re-winding of the hose 1 onto the reel (7) takes place through a rotation of the winding drum (7a). Such rotation can be produced through any dedicated motor, or through the connection of the drum (7a) to a power take-off of the tractor (T), by means of a joint not illustrated in detail as known to a person skilled in the art.

The irrigation device further comprises a dispenser (9), connected to a second end (1b) of the hose (1). Different types of dispensers are available to a person skilled in the art, therefore they will not be described in further detail. The dispenser (9) may be installed on a trolley (10), provided with wheels (10b), which is designed to be able to be coupled to a tractor (T) through a joint (10a). This allows the dispenser (9) to be positioned pulling the trolley (10), coupled to the tractor (T), into the desired position.

Advantageously, a coupling means (8c, 10c) can be provided to allow the coupling of the support frame (8) to the trolley (10). In particular, the coupling means (8c, 10c) allows the frame (8) to be coupled to the back of the trolley (10), to allow the frame (8) to be pulled by the tractor (T).

With particular reference to the hose (1), a method for producing the hose itself is described.

The production method envisages the steps of:
- Taking the hose (1);
- Drawing the hose (1) making it pass inside a die, provided with a plurality of tips, so that the outer surface (3) comes into contact with the tips of the die, generating the plurality of scorings (4);
The drawing step is performed by sealing the open terminal ends of the hose (1) and applying inside the hose itself a pressure comprised between 4 and 12 atm, preferably 8 atm.

For the sake of procedural simplicity, in the process the drawing step is preferred, i.e. the process according to which the hose (1) is pulled at the outlet of the die so as to mainly apply traction strain to the hose (1).

The aforesaid drawing step takes place cold, or at room temperature, therefore without treating the hose (1) before it comes into contact with the die.

By starting this particular production method the Applicant has been able to note how the outer surface (3) of the hose (1), crossing the die, undergoes plastic and not elastic deformation.

By putting the inside of the hose (1) under pressure, it is possible to use a die with an inner diameter slightly less than the outer diameter of the hose (1).

## Claims

1. An irrigation hose (1) comprising a main body (2), having a tubular conformation and provided with a longitudinal axis (X), having an outer surface (3), concentric to the longitudinal axis (X) wherein the outer surface (3) comprises a plurality of scorings (4) parallel to the longitudinal axis (X), **characterised in that** the scorings (4) are irregular, defining irregular shaped peaks (41) and irregular shaped troughs (42), each peak (41) and each through (42) having a profile that, on a section plane radial with respect to the longitudinal axis (X), is not defined by a straight line, but by a broken line with a sinuous trend.

2. An irrigation device, comprising: a hose (1) according to claim 1, equipped with a first end (1a) and with a second end (1b); a winding reel (7), equipped with a winding drum, rotating about an axis of rotation (Y), to which the first end (1a) of the hose (1) is connected; a support frame (8), to which the winding reel (7) is connected, structured to allow the rotation of the winding drum about the axis of rotation (Y).

3. The irrigation device according to claim 2, wherein the main body (2) of the hose (1) is made of polyethylene (PE).

4. The irrigation device according to claim 2, wherein the distance between a peak and the two adjacent troughs is comprised between 0.2 and 1.5 mm.

5. The irrigation device according to claim 3, wherein the distance between a peak and the two adjacent troughs is about 1 mm.

6. The irrigation device according to claim 2, comprising: a dispenser (9) connected to the second end (1b) of the irrigation hose (1); a trolley (10), that supports the dispenser (9) and is designed to be able to be coupled to a tractor (T).

7. The irrigation device according to claim 6, comprising coupling means (8c, 10c) to allow the coupling of the support frame (8) to the trolley (10).

## Patentansprüche

1. Bewässerungsschlauch (1), umfassend einen Hauptkörper (2), aufweisend eine rohrförmige Beschaffenheit und versehen mit einer Längsachse (X), aufweisend eine äußere Oberfläche (3), die konzentrisch zur Längsachse (X) angeordnet ist, wobei die äußere Oberfläche (3) eine Vielzahl von Riefen (4) umfasst, die parallel zur Längsachse (X) angeordnet sind, **dadurch gekennzeichnet, dass** die Riefen (4) unregelmäßig sind und unregelmäßig geformte Spitzen (41) und unregelmäßig geformte Vertiefungen (42) definieren, wobei eine jede Spitze (41) und eine jede Vertiefung (42) ein Profil aufweisen, das auf einer Schnittebene, die in Bezug auf die Längsachse (X) radial ist, nicht durch eine gerade Linie definiert ist, sondern durch eine unterbrochene Linie mit einem gewundenen Verlauf.

2. Bewässerungsvorrichtung, umfassend: einen Schlauch (1) nach Anspruch 1, versehen mit einem ersten Ende (1a) und einem zweiten Ende (1b); eine Wickelspule (7), versehen mit einer Wickeltrommel, die sich rund um eine Rotationsachse (Y) dreht, mit der das erste Ende (1a) des Schlauchs (1) verbunden ist; einen Stützrahmen (8), mit dem die Wickelspule (7) verbunden ist, der strukturiert ist, um die Drehung der Wickeltrommel um die Rotationsachse (Y) zu erlauben.

3. Bewässerungsvorrichtung nach Anspruch 2, wobei der Hauptkörper (2) des Schlauchs (1) aus Polyethylen (PE) besteht.

4. Bewässerungsvorrichtung nach Anspruch 2, wobei der Abstand zwischen einer Spitze und den zwei angrenzenden Vertiefungen zwischen 0,2 und 1,5 mm liegt.

5. Bewässerungsvorrichtung nach Anspruch 3, wobei der Abstand zwischen einer Spitze und den zwei angrenzenden Vertiefungen ungefähr 1 mm beträgt.

6. Bewässerungsvorrichtung nach Anspruch 2, umfassend: einen Spender (9), der mit dem zweiten Ende (1b) des Bewässerungsschlauchs (1) verbunden ist, einen Wagen (10), der den Spender (9) stützt und ausgestaltet ist, um in der Lage zu sein, mit einem Traktor (T) gekuppelt zu werden.

7. Bewässerungsvorrichtung nach Anspruch 6, umfassend Kupplungsmittel (8c, 10c), um das Kuppeln des Stützrahmens (8) mit dem Wagen (10) zu erlauben.

## Revendications

1. Tuyau d'irrigation (1) comprenant un corps principal (2), ayant une conformation tubulaire et pourvu d'un axe longitudinal (X), ayant une surface extérieure (3), concentrique à l'axe longitudinal (X), dans lequel la surface extérieure (3) comprend une pluralité de rainures (4) parallèles à l'axe longitudinal (X), **caractérisé en ce que** les rainures (4) sont irrégulières, définissant des pics (41) de forme irrégulière et des creux (42) de forme irrégulière, chaque pic (41) et chaque creux (42) ayant un profil qui, sur un plan de section radial par rapport à l'axe longitudinal (X), n'est pas défini par une ligne droite, mais par une ligne brisée avec une tendance sinueuse.

2. Dispositif d'irrigation, comprenant : un tuyau (1) selon la revendication 1, équipé d'une première extrémité (1a) et d'une seconde extrémité (1b) ; une bobine d'enroulement (7), équipée d'un tambour d'enroulement, tournant autour d'un axe de rotation (Y), auquel la première extrémité (1a) du tuyau (1) est reliée ; un cadre de support (8), auquel la bobine d'enroulement (7) est reliée, structuré pour permettre la rotation du tambour d'enroulement autour de l'axe de rotation (Y).

3. Dispositif d'irrigation selon la revendication 2, dans lequel le corps principal (2) du tuyau (1) est en polyéthylène (PE).

4. Dispositif d'irrigation selon la revendication 2, dans lequel la distance entre un pic et les deux creux adjacents est comprise entre 0,2 et 1,5 mm.

5. Dispositif d'irrigation selon la revendication 3, dans lequel la distance entre un pic et les deux creux adjacents est d'environ 1 mm.

6. Dispositif d'irrigation selon la revendication 2, comprenant : un distributeur (9) relié à la seconde extrémité (1b) du tuyau d'irrigation (1) ; un chariot (10), qui supporte le distributeur (9) et est conçu pour pouvoir être couplé à un tracteur (T).

7. Dispositif d'irrigation selon la revendication 6, comprenant des moyens d'accouplement (8c, 10c) pour permettre l'accouplement du cadre de support (8) au chariot (10).
